# EUROPÄISCHE PATENTANMELDUNG

(11) **EP 2 974 850 A1**
(43) Veröffentlichungstag der Anmeldung: **20.01.2016**
(21) Anmeldenummer: 14177464.6
(22) Anmeldetag: 17.07.2014
(51) Int. Cl.: B29C 67/00, C09D 11/101, C09D 11/30

(54) **Verdruckbares Baumaterial für 3D-Druck**

(71) Anmelder: Marabu GmbH & Co. KG, 71732 Tamm (DE)
(72) Erfinder: Schäfer, Wolfgang, 74321 Bietigheim-Bissingen (DE); Hauck, Martin, 71263 Weil der Stadt (DE); Wickenhauser, Steffen, 74232 Abstatt (DE)
(74) Vertreter: Wagner, Kilian

(57) **Zusammenfassung**

Die Erfindung betrifft ein verdruckbares Baumaterial für die Herstellung eines dreidimensionalen Objekts mittels dreidimensionalem Drucken, enthaltend:
als Bindemittel mindestens ein thermoplastisches Polymer ,
als Lösemittel mindestens ein vernetzbares Monomer, das aus folgender Gruppe ausgewählt ist: Acrylate, Methacrylate, Vinylether, stickstoffhaltige Verbindungen mit einer ethylenischen Doppelbindung,
mindestens einen Fotoinitator, wobei das Bindemittel im Lösemittel gelöst ist und wobei Bindemittel, Lösemittel und Fotoinitator so gewählt und auf einander abgestimmt sind, dass das Lösemittel durch Aktivierung des Fotoinitiators vernetzbar ist und dass das Bindemittel nicht durch Aktivierung des Fotoinitiators vernetzbar ist.

## Beschreibung

Die vorliegende Erfindung betrifft ein, insbesondere mittels eines Tintenstrahldruckers (Digitaldruckers), verdruckbares Baumaterial nach dem Oberbegriff des Anspruchs 1, dessen Verwendung für den dreidimensionalen Digitaldruck sowie ein dreidimensionales Objekt erhalten durch dessen Verwendung für den dreidimensionalen Digitaldruck.

Aus dem Stand der Technik sind verdruckbare Baumaterialien basierend auf UV-härtenden Materialien, insbesondere Acrylaten und Vinylether, bekannt. Diese finden insbesondere auch im Bereich des 3D-Druckens Anwendung, das dadurch arbeitet, dass Teile in Schichten gebaut werden. Das 3D-Drucken ist verhältnismäßig schnell und flexibel und ermöglicht z. B. die Herstellung von Prototypteilen und der Werkzeugbereitstellung direkt aus einem CAD-Modell. Die Verwendung des 3D-Druckens ermöglicht, dass der Hersteller vor dem Werkzeug (Spritzgußform) ein vollständiges 3D-Modell irgendeines vorgeschlagenen Produkts erhält, was möglicherweise die Kosten der Werkzeugbereitstellung wesentlich senkt und zu einer besseren Synchronisation zwischen Entwurf und Herstellung führt. Dadurch können niedrigere Produktkosten und verbesserte Produktqualität erhalten werden.

Es sind verschiedene Systeme für das computergestützte 3D-Drucken entwickelt worden. In US-A-6259962 sind eine Vorrichtung und ein Verfahren zum 3D-Modell-Drucken beschrieben. Die Vorrichtung besteht aus einem Druckkopf mit mehreren Düsen, einem Vorratsbehälter, der mit dem Druckkopf verbunden ist, um selektiv Material in Schichten nachzuliefern und einer Härtungseinheit zum optionalen Härten jeder der abgelagerten Schichten enthält. Die Höhe jeder gedruckten Schicht ist durch selektives Einstellen der Abgabe vom Druckmaterial von jeder der mehreren Düsen steuerbar.

In der US-A-6658314 sind eine Vorrichtung und ein Verfahren zum 3D-Modell-Drucken beschrieben. US-A-6658314 beschreibt ein System und ein Verfahren zum Drucken komplizierter 3D-Modelle unter Verwendung von Grenzflächenmaterialien mit verschiedener Härte oder Elastizität und durch Mischen des Grenzflächenmaterials von jedem der Druckköpfe, um die Härte des Materials zu steuern, das das 3D-Modell bildet. Die Konstruktionsschichten des Modells werden aus einem Grenzflächenmaterial mit einem anderen (härteren) Elastizitätsmodul als das Material, das zum Bilden der Ablöseschichten (und Trägerschichten) verwendet wird, gebildet, wodurch die Bildung komplizierter Formen ermöglicht wird.

Strahlungshärtbare Tinten sind in den US-Patenten Nr. 4.303.924, 5.889.084 und 5.270.368 offenbart. Das US-Patent Nr.4.303.924 offenbart strahlungshärtbare Zusammensetzungen für das Strahltropfendrucken, die multifunktionales ethylenisch ungesättigtes Material, monofunktionales ethylenisch ungesättigtes Material, einen reaktiven Synergist, ein Farbstoff-Färbungsmittel und ein öllösliches Salz enthalten. Das US-Patent Nr. 5.889.084 offenbart eine strahlungshärtbare Tintenzusammensetzung für das Tintenstrahldrucken, die ein kationisch Fotoreaktives Epoxidether- oder Vinylether-Monomer oder -Oligomer, einen kationischen Fotoinitiator und ein Färbungsmittel umfasst. Das US-Patent Nr. 5.270.368 offenbart eine UV-härtbare Tintenzusammensetzung für das Tintenstrahldrucken, die eine Harzformulierung mit wenigstens zwei Acrylatkomponenten, einem Fotoinitiator und einem organischen Träger umfasst.

Diese offenbarten Tintenzusammensetzungen sind zur Verwendung beim Tintenstrahldrucken formuliert worden. Zusammensetzungen zum Tintenstrahldrucken werden anders formuliert als Zusammensetzungen zum Bauen von 3D-Modellen und haben somit andere Eigenschaften. Zum Beispiel ist für 3D-Objekte eine hohe Viskosität bei Zimmertemperatur eine erwünschte Eigenschaft, so dass Zusammensetzungen zum Bauen von 3D-Modellen so ausgelegt sind, dass sie bei Zimmertemperatur eine hohe Viskosität haben. Im Gegensatz dazu sind Zusammensetzungen für das Tintenstrahldrucken so ausgelegt, dass sie bei Zimmertemperatur eine niedrige Viskosität haben, damit sie beim Druckprozess gut funktionieren.

Im US-Patent Nr. 5.705.316 sind strahlungshärtbare Tinten für 3D-Objekte offenbart. Die US 5.705.316 offenbart Verbindungen mit wenigstens einer Vinylethergruppe, die in den Molekülen außerdem wenigstens eine weitere Funktionsgruppe wie etwa eine Epoxid- oder eine Acrylatgruppe enthalten, ferner Zusammensetzungen, die diese Verbindungen umfassen sowie Verfahren zum Herstellen von 3D-Objekten unter Verwendung dieser Zusammensetzungen. Die Zusammensetzungen der US 5.705.316 sind komplizierte Moleküle, die nicht leicht verfügbar sind und die somit speziell synthetisiert werden müssen, was zusätzliche Zeit und Kosten verursacht.

Bekannte Baumaterialien zum Einsatz im 3D-Drucken sind in der EP 2 277 686 B1 beschrieben. Dort setzen sie sich aus UV-reaktiven Monomeren, UV-reaktiven Oligomeren, Fotoinitiatoren und Additiven zusammen.

Allerdings ist bei diesen aus dem Stand der Technik bekannten Baumaterialien insoweit nachteilig, dass sich das durch sie gebildete gedruckte Objekt beim Aushärten oft verformt, weshalb das erzielte Objekt von der gewünschten Form abweichen kann, wodurch es sich für den Druck von Objekten mit hohen Präzisionsanforderungen nur bedingt eignet und dass das gedruckte Objekt oft eine geringe Elastizität aufweist und brüchig ist.

Aufgabe der vorliegenden Erfindung ist es daher, ein Baumaterial zu schaffen, wobei die vorgenannten Eigenschaften im Hinblick auf das dreidimensionale Objekt verbessert und optimiert sind und ein entsprechendes Verfahren zur Vefügung zu stellen.

Die Aufgabe wird vorrichtungsgemäß durch das Baumaterial mit den Merkmalen des Anspruchs 1 und verfahrensgemäß durch ein Verfahren mit den Merkmalen des unabhängigen Verfahrensanspruchs gelöst. Vorteilhafte Weiterbildungen der Erfindung sind in den Unteransprüchen beschrieben. Zur Vermeidung von Wiederholungen sollen vorrichtungsgemäß offenbarte Merkmale als verfahrensgemäß offenbart und beanspruchbar gelten sowie verfahrengemäß offenbarte Merkmale als vorrichtungsgemäß offenbart und beanspruchbar gelten.

Ein erfindungsgemäßes verdruckbares Baumaterial umfasst als Bindemittel mindestens ein thermoplastisches Polymer. Ferner umfasst es als Lösemittel mindestens ein strahlenhärtbares Monomer, das aus folgender Gruppe ausgewählt ist: Acrylate, Methacrylate, Vinylether, stickstoffhaltige Verbindungen mit einer ethylenischen Doppelbindung. Zudem umfasst es mindestens einen Fotoinitator. Erfindungsgemäß sind Bindemittel, Lösemittel und Fotoinitator im Baumaterial so gewählt und auf einander abgestimmt, dass der Fotoinitiator bei Aktivierung das Lösemittel vernetzen kann und das thermoplastische Polymer nicht vernetzen kann.

Insbesondere müssen der oder die Fotoinitiatoren so ausgewählt sein, dass keiner der enthaltenen Fotoinitiatoren das thermoplastische Polymer mit sich selbst oder mit dem Monomer vernetzt. Sämtliche beinhalteten Fotoinitiatoren sind spezifisch für das Bindemittel, d.h. sie vernetzen nur das Monomer miteinander. So wird insgesamt eine Polymermatrix (bestehend aus vernetzten Monomeren) erhalten, in die das thermoplastische Polymer rein physikalisch eingebettet ist, d.h. nicht kovalent mit dieser Matrix verbunden ist. Der Unterschied zwischen üblicherweise bisher im Stand der Technik eingesetzten UV-härtenden Oligomeren und dem erfindungsgemäß eingesetzten nicht härtbaren Polymer, welches in Monomeren in gelöster Form eingesetzt wird, besteht darin, dass das UV-härtende Oligomer in das Baumaterial chemisch fest verankert wird, die nicht reaktiven thermoplastischen Polymere hingegen nicht chemisch vernetzt werden.

Hierdurch wird die Vernetzungsdichte im Baumaterial herabgesetzt, was positive Auswirkungen auf die Verarbeitbarkeit des Baumaterials während des Druckens sowie positive Eigenschaften auf das gedruckte Objekt während und nach dem Aushärten hat. So wird durch die geringe Vernetzungsdichte die Gefahr des Verzuges oder Schrumpfes, insbesondere beim Aushärten, herabgesetzt, wodurch das erfindungsgemäße Baumaterial eine höhere Qualität des gedruckten Objekts im Hinblick auf die gewünschte Formgebung mit sich bringt.

Dadurch, dass das thermoplastische Polymer im Baumaterial lediglich physikalisch in die aus vernetzten Monomeren bestehende Polymermatrix eingebunden ist, wird ein im Vergleich zum Stand der Technik elastischeres Baumaterial erhalten. Auf die Gesamtelastizität kann durch die Wahl der Menge des thermoplastischen Polymers und durch die Wahl des thermoplastischen Polymers als solches Einfluss genommen werden (elastischere thermoplastische Polymere liefern ein elastischeres Endprodukt).

Die Erfindung zeichnet sich ferner dadurch aus, dass bei einem vorgeschlagenen Baumaterial nicht vernetzbares thermoplastisches Polymer mit vernetzbaren Monomeren vorliegt, insbesondere in diesen gelöst sind. Hier wurde in erfindungsgemäß vorteilhafter Weise zunächst überraschenderweise erkannt, dass verschiedene Monomere verschiedene thermoplastische Polymere überhaupt in eine stabile Lösung bringen können und sich dann durch Aktivierung durch den Fotoinitiator zur Filmbildung mit den thermoplastischen Polymeren eignen. Dies wird erfindungsgemäß vorteilhaft dann dazu genutzt, dass das resultierende Baumaterial durch handelsübliche 3D Drucker verdruckt werden kann.

Somit werden Materialien für die Herstellung eines dreidimensionalen Objekts mittels dreidimensionalen Drucken mit verbesserten Eigenschaften geschaffen.

Typischerweise erfolgt das Härten bevorzugt durch Aktivierung des Fotoinitiators durch UV-Bestrahlung oder LED-Bestrahlung, wobei typische Härtezeiten von deutlich unter 1 sek. zu einer sehr schnellen Aushärtung des flüssigen Baumaterials führen. Nach Aushärtung sind die Baumaterialien direkt wieder überdruckbar oder weiterverarbeitbar.

Im Rahmen der Erfindung ist dabei der Begriff "härtbar" bzw. "strahlenhärtbar" auch als "vernetzbar" zu verstehen, was bedeutet, dass mittels Kettenpolymerisation eine Aushärtung der Druckschicht erfolgt. Der Begriff "nicht vernetzbar" bedeutet in diesem Zusammenhang insbesondere auch das Nicht-Vorliegen einer reaktiven Gruppe, insbesondere einer Doppelbindung, welche durch einen verwendeten Fotoinitiator vernetzen könnte.

Die Zusammensetzung des Baumaterials zur Verwendung bei der Fertigung der 3D-Objekte umfasst wenigstens ein nichtreaktives thermoplastisches Polymer, welches in reaktivem Monomer gelöst wurde, wenigstens einen Fotoinitiator sowie bevorzugt wenigstens ein Additiv.

Bevorzugt handelt es sich bei dem erfindungsgemäßen, flüssigen Baumaterial nicht um ein thermisch mittels Polyamiden härtbares System - mit Worten enthält die erfindungsgemäße Zusammensetzung keinen Härter auf Basis von Polyaminen, so dass die einzigen Vernetzungsreaktionen rein fotokatalytisch bedingt sind.

Im Hinblick auf die weitere Ausgestaltung des Baumaterials gibt es zwei unterschiedliche Möglichkeiten. Gemäß einer ersten Ausführungsform ist neben dem thermoplastischen Polymer in Form des Bindemittels zusätzlich ein bevorzugt reaktives Polymer enthalten, das durch Aktivierung des Fotoinitiators mit sich selbst und/oder dem Lösemittel vernetzbar ist. Dies führt dazu, dass neben dem lediglich physikalisch eingebundenen, das heißt nicht kovalent mit dem vernetzten Monomer verbundenen thermoplastischen Polymer ein zusätzliches Polymer enthalten ist, welches mit dem Monomer und/oder mit sich selbst durch die erfolgte Polymerisationsreaktion vernetzt ist.

Daneben ist eine alternative, besonders bevorzugte Ausführungsform realisierbar, bei welcher neben dem thermoplastischen Polymer in Form des Bindemittels kein weiteres Polymer, insbesondere kein durch Aktivierung des Fotoinitiators vernetzbares Polymer, im Baumaterial enthalten ist. Somit ist sämtliches im Baumaterial enthaltenes Polymer ausschließlich physikalisch eingebunden, jedoch nicht chemisch vernetzt. Hierdurch wird ein nach Bestrahlung besonders elastisches Material erhalten, das sich zudem durch eine gute Maßhaltigkeit auszeichnet.

Die Zusammensetzung des Baumaterials wird bevorzugt so formuliert, dass sie zur Verwendung mit Tintenstrahldruckern kompatibel ist und bei Zimmertemperatur eine Viskosität über 50 mPa·s (cps) besitzt.

Die Baumaterialien können zusätzlich zu den erfindungsgemäß enthaltenen Bindemitteln wie alle Druckfarben und/oder Drucklacke viele verschiedene Komponenten enthalten und müssen selbstverständlich der jeweiligen Anwendung des zu fertigenden 3D Objektes angepasst werden. Zu den verschiedenen Komponenten zählen z.B. Pigmente und/oder Hilfsmittel, welche meist nur in sehr geringen Mengen benötigt werden, für eine problemlose Verarbeitung jedoch häufig günstig sind. Dabei sorgt vorteilhaft das thermoplastische Polymer in Verbindung mit dem typischerweise nicht flüchtigen (oder bestenfalls gering flüchtigen) Monomer dafür, dass das Bindemittel rein physikalisch, d.h. nicht kovalent gebunden, fest in der Matrix aus vernetztem Monomer (Lösemittel) eingebunden ist und so das fertige Objekt Beanspruchungen durch Abrieb und Hitze ohne Schädigung übersteht.

Der wesentliche Vorteil der vorliegenden Erfindung liegt darin, dass durch das zum Einsatz kommende Baumaterial, für das das thermoplastische Polymer in vernetzbaren Monomeren gelöst wird, eine Elastizität (Verformbarkeit) des 3D Objektes erzielt werden kann. Zudem wird die Maßhaltigkeit verbessert (geringer Verzug).

Bei einem erfindungsgemäßen Baumaterial ist das Bindemittel (Festharz) in einem oder mehreren vernetzbaren Monomeren gelöst, welche z. B. auf Grund von zur Polymerisation geeigneten Acrylatgruppen oder ethylenisch ungesättigten Gruppen vernetzbar sind. Bevorzugt handelt es sich bei diesen Monomeren um monofunktionelle Acrylate. Es können jedoch auch höher funktionelle Acrylate oder Methacrylate verwendet werden.

Die thermoplastischen Polymere können aus einer großen Vielfalt von Harzen ausgewählt sein. Beispiele sind, ohne darauf beschränkt zu sein:
Aldehydharze
   (z.B. Laropal A81 von BASF),
Epoxidharze
   (z.B. Epikote 1002 von Momentive, Araldite 6099 von Huntsman),
Polyesterharze
   (z.B. Dynapol L411 von Evonik),
Cellulose Esther
   (z.B. CAB381-05 oder CAB551-0.01 von Eastman Chemical),
Methylmethacrylat-Colpolymere
   (z.B. Paraloid B-48N, Paraloid B60, Paraloid B-82 von Rohm & Haas, Neocryl B-810, Neocryl B-811 von DSM),
Ethylmethacrylat
   (z.B. Paraloid B 72 von Rohm & Haas),
Butylmethacrylat-Copolymere
   (z.B. Degalan LP 67/11, Degalan LP 64/12, Degalan LP 65/12, Degalan LP 68/04 von Evonik),
ungesättigte Polyesterharze
   (z.B. AddBond LTH von Tego),
gesättigte Polyesterharze
   (Dynapol L 912, Dynapol L 952 von Degussa).

Derartige Harze können beispielsweise in einer Menge von 1 bis 50 Gew.% Trockengewicht bezogen auf die Gesamtmasse des Baumaterials, bevorzugt von 2 bis 30 Gew.%, besonders bevorzugt 5 bis 20 Gew.% vorliegen, um bestimmte Eigenschaften wie z.B. Flexibilität oder Temperaturbeständigkeit zu optimieren.

Die vernetzbaren Monomere dienen zur Lösung des Bindemittels (Festharzes), beruhen jedoch verglichen mit den Lösemitteln wie sie in herkömmlichem Sinne verstanden werden, auf einem anderen Prinzip. Die Lösemittel im herkömmlichen Sinne dienen ausschließlich zum Lösen des Festharzes. Durch die anschließende Trocknung der Lösung sollen die Lösemittel möglichst vollständig, d.h zu nahezu 100%, verdunsten und haben somit keine filmbildenden Eigenschaften. Bei der vorliegenden Erfindung jedoch werden vernetzbare Monomere eingesetzt, die das Festharz auch lösen sollen, aber sie verbleiben zu 100% in der Lösung/Baumaterial, so dass sie maßgeblich auf die Eigenschaften des gehärteten Baumaterials Einfluß nehmen und die Filmeigenschaften entscheidend beeinflussen. Die strahlenhärtbaren Monomere sollten bevorzugt einen geringen Dampfdruck aufweisen.

Beispielsweise, ohne darauf beschränkt zu sein, können als vernetzbare Monomere Isobornyl(meth)acrylat (IBO(M)A), 2-Phenylethyl(meth)acrylat (PE(M)A), ethoxylierte 2-Phenylethoxyacrylate, methoxylierte Polyethylenglykolmono(meth)acrylate, alkoxyliertes Tetrahydrofurfuryl(meth)acrylat, alkoxyliertes Laurylacrylat, alkoxyliertes Phenylacrylat, , Lauryl(meth)acrylat, Iso-decyl(meth)acrylat, Isooctylacrylat, Octylacrylat, Tridecyl(meth)acrylat, Caprolactonacrylat, ethoxyliertes oder alkoxyliertes Nonylphenol(meth)acrylat, cyclisches Trimethylolpropanformalacrylat, Glicidylmethacrylat, Propylenglykolmonomethacrylat, 2-(2-Ethoxyethoxy)ethylacrylat (EOEOEA), Methylmethacrylat (MMA), propoxyliertes Allylmethacrylat, ethoxylierte Hydroxyethylmethacrylate, Ethoxytriglykolmethacrylat, 1,6-Hexandioldi(meth)acrylat (HDD(M)A), alkoxylierte Hexandioldiacrylate, alkoxylierte Cyclohexandimethanoldi(meth)acrylate, 1,3-Butylenglykoldi(meth)acrylat, 1,4 Butandioldi(meth)acrylat, Diethylenglykoldi(meth)acrylat, Polyethylenglykol(200)Diacrylat, Polyethylenglykol(400)Di(meth)acrylat, Polyethylenglykol(600)Di(meth)acrylat, Tetraethylenglykoldi(meth)acrylat, Triethylenglykoldi(meth)acrylat, Ethylenglykoldimethacrylat, Polyethylenglykoldimethacrylat, Dipropylenglykoldiacrylat (DPGDA), alkoxyliertes Neopentylglykoldi(meth)acrylat, propoxyliertes Trimethylolpropantriacrylat, Trimethylolpropantri(meth)acrylat, propoxyliertes Glyceryltriacrylat GPTA), Tripropylenglykoldiacrylat (TPGDA), Trimethylpropantriacrylat (TMPEOTA), Tricyclodecandimethanoldiacrylat (TCDDMDA), niedermolekulare monofunktionelle Urethanacrylate, niedermolekulare Epoxyacrylate, Hydroxypropylmethacrylat (HPMA) verwendet werden.

Die vernetzbaren Monomere im Baumaterial können außerdem Moleküle mit einem oder mit mehreren Vinylethersubstituenten sein. Es sind herkömmliche Vinylether-Monomere geeignet, die wenigstens eine Vinylethergruppe besitzen. Beispiele von Vinylethern sind Ethylvinylether, Propylvinylether, Isobutylvinylether, Cyclohexylvinylether, 2-Ethylhexylvinylether, Butylvinylether, Ethylenglycolmonovinylether, Diethylenglycoldivinylether, Butandioldivinylether, Hexandioldivinylether, Cyclohexandimethanolmonovinylether und dergleichen. Ein Beispiel eines Vinylethers für die vorliegende Erfindung ist ein 1,4-Cyclohexandimethanoldivinylether, der unter dem Handelsnamen CHVE von ISP vertrieben wird.

Beispiele, ohne darauf beschränkt zu sein, für die Verbindungen mit einer ethylenisch ungesättigten Bindung sind N-Vinylpyrrolidon (NVP), N-Vinylcaprolactam (NVC), N-Vinylformamid (NVF) oder Acrylmorpholin (ACMO). Aus bekannten Gesundheitsgründen sollte dabei auf die Verwendung von N-Vinylpyrrolidon (NVP) und N-Vinylcaprolactam (NVC) möglichst verzichtet werden.

Ganz besonders bevorzugt sind aus der vorhergehenden Aufzählung 2-Phenylethoxyacrylat (PEA) und/oder Acrylmorpholin (ACMO) und/oder Isobornylacrylat (IBOA).

Dem Baumaterial können ein oder mehrere zusätzliche UV-härtbare oder strahlenhärtbare Monomere zugesetzt werden. Bei diesen UV-härtbaren Monomeren, die ebenfalls gehärtet werden, kann es sich auch um die oben im Zusammenhang mit der Festharzlösung erörterten UV-härtbaren Monomere handeln. Die Gesamtmenge an UV-härtbaren Monomeren beträgt im allgemeinen 1-99 Gew.%, bevorzugt 25 bis 85 Gew.%, insbesondere 50 bis 85 Gew.%.

Der Prozess der Vernetzung der Monomere erfolgt beispielsweise über UV-Härtung, insbesondere über Quecksilberstrahler und/oder LED-Strahler. Diese sind bereits aus der Literatur bekannt und in verschiedenen anderen Anwendungen, wie zum Beispiel bei der Bedruckung von optischen Speichermedien, Stand der Technik.

Die reaktiven Monomere im Baumaterial können außerdem Moleküle mit einem oder mit mehreren Epoxidsubstituenten sein. Herkömmliche Epoxid-Monomere mit wenigstens einem Oxirananteil sind bevorzugt.

Die reaktiven Monomere des Baumaterials können auch irgendeine Kombination einer wie oben definierten Acrylkomponente, wie oben definierte Moleküle mit einem oder mit mehreren Epoxidsubstituenten, wie oben definierte Moleküle mit einem oder mit mehreren Vinylethersubstituenten, und/oder ethylenisch ungesättigte Verbindungen mit einem Stickstoffatom, insbesondere N-Vinylpyrrolidon, N-Vinylcaprolactam, N-Vinylformamid oder Acrylmorpholin umfassen.

Als Fotoinitiator können sowohl radikal bildende Initiatoren als auch kationische Initiatoren sowie irgendeine Kombination daraus verwendet werden.

Der Fotoinitiator mit freien Radikalen kann irgendeine Verbindung sein, die bei Belichtung mit Strahlung wie etwa Ultraviolettstrahlung oder sichtbarer Strahlung ein freies Radikal erzeugt und dadurch eine Polymerisationsreaktion auslöst.

Verwendet werden vorzugsweise mindestens ein Fotoinitiator, gewöhnlich zwei und möglicherweise drei oder mehr Fotoinitiatoren, um die Oberflächen- und Tiefenhärtung (Vernetzung) des Baumaterials mit UV-Licht einzuleiten. Bevorzugt werden Fotoinitiatoren mit möglichst geringer Neigung zur Migration und Flüchtigkeit. Außerdem sollten die verwendeten Fotoinitiatoren eine möglichst geringe Neigung zum Vergilben zeigen, damit sich die Farbe des Bauteils nicht verändert und/oder verfälscht wird.

Sie können aus den in üblichen in UV-härtenden Druckfarben und -lacken usw. verwendeten Fotoinitiatoren ausgewählt werden. Beispielsweise, ohne darauf beschränkt zu sein, 1-Hydroxycyclohexylacetophenon (Irgacure^{®} 184 von BASF), 2-Methyl-1-[4-(methylthiophenyl)-2-morpholinopropan]-1-on (Irgacure^{®} 907 von BASF), 2-Hydroxy-1-[4-(2-hydroxyethoxy)phenyl]-2-methyl-1-propanon (Irgacure^{®} 2959 von BASF), α-Dimethoxy-aphenylacetophenon (Irgacure^{®} 651 von BASF), 2-Benzyl-2-dimethylamino-1-(4-morpholinophenyl)butan-1-on (Irgacure^{®} 369 von BASF), Bis(2,4,6-trimethylbenzoyl)phenylphosphinoxid (Irgacure^{®} 819 von BASF), 2-Hydroxy-2-methyl-1-phenyl-1-propanon (Irgacure^{®} 1173 von BASF), Isopropylthioxanthon (ITX von BASF), 2-Chlorthioxanthon (CTX von Lambson), Benzophenon, 2,4,6-Trimethylbenzoldiphenylphosphinoxid (TPO von BASF), Ethyl-2,4,6-trimethylbenzoylphenylphosphinat (TPO-L von BASF) und Methylbenzoylformiat (MBF von Lambson).

Die Zugabemenge hängt stark von den verwendeten reaktiven Monomeren, der Pigmentierung des Baumaterials und der Art der verwendeten Fotoinitiatoren ab. Die Gesamtmenge an Fotoinitiatoren beträgt im allgemeinen 0,5 bis 20 Gew.%, bevorzugt 2 bis 12 Gew.%, besonders bevorzugt 4-10% bezogen auf die Gesamtmasse des Baumaterials.

Bei der Verwendung von Typ II Fotoinitiatoren wie z.B. Benzophenon oder deren Derivaten können auch zusätzlich Co-Initiatoren wie Amine (z.B. MDEA von BASF) oder aminmodifizierte Acrylate (z.B. Ebecryl P115, Ebecryl 7100 von Allnex; Actilane 705, Actilane 715, Actilane 755 von Akzo Nobel Resins bv.; Laromer PO 94 F, Laromer LR 8869 von BASF; Craynor503, Craynor 550 von Arkema; Fotomer 4775F von Cognis) in Mengen von 0,5 bis 20 Gew.%, bezogen auf die Gesamtmasse des Baumaterials in Abhängigkeit des reaktiven Monomere und der Art der verwendeten Fotoinitiatoren, eingesetzt werden.

Bevorzugt werden Bis(2,4,6-trimethylbenzoyl)phenylphosphinoxid (Irgacure^{®} 819 von BASF), 2-Hydroxy-2-methyl-1-phenyl-1-propanon (Irgacure^{®} 1173 von BASF) und Trimethylbenzoldiphenylphosphinoxid (TPO von BASF) eingesetzt.

Geeignete kationische Fotoinitiatoren für die vorliegende Erfindung enthalten Verbindungen, die bei Bestrahlung mit UV-Licht und/oder sichtbarem Licht, das ausreicht, um die Polymerisation auszulösen, aprotische Säuren oder Bronstead-Säuren bilden. Der verwendete Fotoinitiator kann eine Einzelverbindung, ein Gemisch zweier oder mehrerer aktiver Verbindungen oder eine Kombination zweier oder mehrerer verschiedener Verbindungen, d. h. Co-Initiatoren, sein. Beispiele geeigneter kationischer Fotoinitiatoren sind Aryldiazoniumsalze, Diaryliodoniumsalze, Triarylsulfoniumsalze, Triarylselenoniumsalze und dergleichen. Ein bevorzugter kationischer Fotoinitiator für die vorliegende Erfindung ist ein Gemisch von Triarylsulfonium-Hexafluoroantimonatsalzen, das von Union Carbide als UVI-6974 vertrieben wird.

Die Art des Fotoinitiators ist erfindungsgemäß so zu wählen, dass eine chemische Reaktion/Polymerisation des thermoplastischen Polymers mit sich selbst und/oder anderen Bestandteilen des Baumaterials, insbesondere Fotoinitiator und/oder Monomer, ausgeschlossen ist. Bei der Verwendung eines Epoxidharzes ist so z.B. die Verwendung eines kationischen Fotoinitiators ausgeschlossen, da der vorhandene Oxiranring bei der Polymerisation durch eine kationische Kettenreaktion aufbricht und mit anderen Oxiranringen zu einem Polymer polymerisiert. Radikalische Fotoinitiatoren können dagegen in Verbindung mit Epoxidharzen verwendet werden, ohne dass diese mit in das entstehende Polymer chemisch eingebunden werden.

Im Allgemeinen enthält das erfindungsgemäße Baumaterial auch einen Entschäumer und/oder ein Verlaufmittel. Entschäumer können z.B., ohne darauf beschränkt zu sein, aus modifizierten Acrylaten oder modifizierten Acrylatcopolymeren, aber auch aus silikonhaltigen Verbindungen ausgewählt sein. Verlaufmittel umfassen beispielsweise modifizierte Polyacrylate und Polysiloxane.

In Abhängigkeit vom Typ des verwendeten Entschäumers und/oder Verlaufsmittels werden diese in einer Menge von 0,1 bis 2,5 Gew. % bezogen auf die Gesamtmasse der Druckfarbe bzw. des Lacks eingesetzt. Bevorzugte Verwendung finden bei den Entschäumern und Verlaufmitteln silikonfreie Produkte, um eine Migration dieser Verbindungen und die dadurch mögliche Delamination der Zwischenschichten im Baumaterial des zu fertigenden 3D Objektes zu vermeiden.

Als Stabilisatoren werden, ohne darauf beschränkt zu sein, bevorzugt Genorad 16 von der Fa. Rahn und Fluorstab UV2 von der Fa. Kromachem verwendet.

In einer Ausführungsform der vorliegenden Erfindung umfasst das Baumaterial ferner wenigstens ein Pigment und wenigstens ein Dispergiermittel. Das Pigment ist ein weißes Pigment, ein organisches Pigment, ein anorganisches Pigment, ein Metallpigment oder eine Kombination davon.

Bei den Pigmenten, die in dem erfindungsgemäßen Baumaterial vorzugsweise enthalten sind, kann es sich um beliebige Pigmente handeln. Verwendet werden können z.B., ohne darauf beschränkt zu sein, Titandioxid, Zinksulfid, Pigmentruß, Azodiarylgelb, Isoindolgelb, Diarylidorange, Chinacridonmagenta, Diketopyrrolorot, Kupferphthalocyaninblau, Kupferphthalocyaningrün, Dioxazinviolett und Diketometalloxid.

Zusätzlich oder alternativ zu mindestens einem Pigment kann auch mindestens ein löslicher Farbstoff in der Formulierung vorgesehen sein. Eine ziemlich umfassende Auflistung weiterer einsetzbarer Pigmente ist im Colour Index International, Fourth Edition Online, 2001, veröffentlicht von der Society of Dyers and Colourists in Verbindung mit der American Association of Textile Chemists and Colorists zu finden.

Es können bei entsprechender Teilchengröße auch Effektpigmente wie, ohne darauf beschränkt zu sein, Metalloxid-beschichtete Glimmer und Metallicpigmente, eingesetzt werden.

Die Menge an Pigment beträgt gewöhnlich 0,01 bis 10 Gew.%, bevorzugt 0,05 bis 2 Gew.%, bezogen auf das Gewicht des Baumaterials, abhängig von der Art des Pigments und/oder der gewünschten Blickdichte. Alle verwendeten Pigmente müssen sehr temperaturstabil sein und sich durch die entstehende Temperatur beim Verdrucken nicht zersetzen, sublimieren oder den Farbton verändern.

Beispiele von Dispergiermitteln für die vorliegende Erfindung sind Dispergiermittel, die ein Copolymer mit Säuregruppen umfassen, das unter dem Warenzeichen Disperbyk 110 von Byk Chemie vertrieben wird und ein Dispergiermittel, das ein Blockcopolymer mit hohem Molekulargewicht mit affinen Pigmentgruppen umfasst, das unter dem Handelsnamen Disperbyk 163 von Byk Chemie vertrieben wird.

Die Härtung der Farbe wird vorzugsweise mit UV-Licht in einem Wellenlängenbereich von 200 bis 450 nm vorgenommen, die ausreichend ist, um eine vollständige Härtung der Druckfarbe oder des Drucklacks zu erzielen. Alternativ kann die Farbe oder der Lack auch ohne die Verwendung von Fotoinitiatoren mit Elektronenstrahlen gehärtet werden. So ist im nachfolgenden, falls der Begriff "UV-härtbar" verwendet wird, die Härtung über eine andere Strahlung, z.B. Elektronenstrahlen, als Alternative mitzulesen. Außerdem können für die Trocknung der UV-härtbaren Farbe LED-Einheiten verwendet werden, welche nahezu monochromatisches Licht im UVA-Bereich oder im kurzwellig sichtbaren Licht abstrahlen.

Das Baumaterial kann in einem Druckverfahren ähnlich dem in der vorgenannten EP 2 277 686 B1 beschriebenen zum Einsatz kommen.

Dabei wird das zu bildende Objekt aus dem Baumaterial gefertigt, wobei beim Drucken unterstützend ein Supportmaterial auf bekannte Weise verwendet werden kann.

Ganz besonders bevorzugt ist eine Ausführungsform des Baumaterials, bei welcher die Viskosität des Baumaterials, gemessen bei Drucktemperatur, insbesondere bei 70 °C, vorzugsweise mit einem Kegel-Platte-Verfahren, vorzugsweise bei einer Scherrate von 100/s (Rheometer der Fa. Paar Physica, Physica MCR300) entgegen der Lehre aus dem Stand der Technik größer ist als 20 mPas. Ganz besonders bevorzugt ist diese Viskosität aus einem Bereich zwischen 25 mPas und 35 mPas gewählt. Überraschend wurde festgestellt, dass sich auch Baumaterial mit dieser vergleichsweise hohen Viskosität mit Standarddigitaldruckköpfen gut verdrucken lässt. Ein Hauptvorteil der hohen Viskosität besteht darin, dass verglichen mit dem Stand der Technik ein höherer thermoplastischer Polymeranteil einsetzbar ist. Grundsätzlich ist es jedoch auch möglich, niedrigere Viskositäten von unter 20 mPas mit einem nach dem Konzept der Erfindung ausgebildeten Baumaterial zu realisieren.

Die nachfolgenden Beispiele dienen der exemplarischen Erläuterung der Erfindung und sind nicht als Beschränkung aufzufassen.

### Ausführungsbeispiele:

### Zunächst folgen die Beispiele 1 bis 7 zur Herstellung der Lösung aus einem anspruchsgemäßen thermoplastischen Bindemittel in UV-härtbaren Monomeren als Basis für die Herstellung von erfindungsgemäßen Baumaterialvarianten.

Generell, unabhängig von den folgenden konkreten Ausführungsbeispielen wird zur Herstellung des erfindungsgemäßen Baumaterials zunächst das thermoplastische Bindemittel in Monomeren gelöst und diese Lösung dann mit den weiteren Bestandteilen gemischt.

### Beispiel Bindemittel-Lösung 1

50% Laropal A81 werden mit 25% Isobornylacrylat und 25% Acrylmorpholin eingewogen und für 2 x 40min in einem Shaker gelöst. Die entstandene homogene Festharzlösung hat eine Viskosität von 2900 mPas bei 20°C und von 60 mPas bei 70°C und kann sehr gut zur Herstellung eines Baumaterials verwendet werden.

### Beispiel Bindemittel-Lösung 2

| | |
|---|---|
| Epikote 1002 | 30% |
| Isobornylacrylat | 35% |
| Acrylmorpholin | 35% |
| | |
| Shaker 2 x 40min | |
| | |
| 680mPas@20°C | |
| 40mPas@70°C | |

### Beispiel Bindemittel-Lösung 3

| | |
|---|---|
| Araldite 7072 | 30% |
| Isobornylacrylat | 35% |
| Acrylmorpholin | 35% |
| | |
| Shaker 2 x 40min | |
| | |
| 720mPas @ 20°C | |
| 40mPas @ 70°C | |

### Beispiel Bindemittel-Lösung 4

| | |
|---|---|
| Tego Adbond LTH | 30% |
| Isobornylacrylat | 35% |
| Acrylmorpholin | 35% |
| | |
| Shaker 2 x 40min | |
| | |
| 600mPas @ 20°C | |
| 50mPas @ 70°C | |

### Beispiel Bindemittel-Lösung 5

| | |
|---|---|
| Elvacite 1010 | 30% |
| Acrylmorpholin | 70% |
| | |
| Shaker 2 x 40min | |
| | |
| 500mPas @ 20°C | |
| 30mPas @ 70°C | |

### Beispiel Bindemittel-Lösung 6

| | |
|---|---|
| Elvacite 1010 | 30% |
| 2-Phenoxyethylacrylat | 70% |
| | |
| Shaker 2 x 40min | |
| | |
| 400mPas @ 20°C | |
| 25mPas @ 70°C | |

### Beispiel Bindemittel-Lösung 7

| | |
|---|---|
| Tego Adbond LTH | 40% |
| Acrylmorpholin | 60% |
| | |
| Shaker 2 x 40min | |

### Beispiele für die Herstellung von fakultativen Farbpasten zur Verwendung in den erfindungsgemäßen Baumaterialien als Farbgeber. Bevorzugt wird generell eine Farbpaste einer Bindemittel-Lösung zugegeben und mit dieser vermischt.

### Farbpaste "Weiß"

| | |
|---|---|
| Bindemittel-Lösung aus Beispiel 7 | 60% |
| 2-Phenoxyethylacrylat | 10% |
| Solsperse 39000 | 10% |
| Hombitec RM 110 | 20% |
| | |
| 2.300mPas @ 20°C | |
| 130mPas @ 70°C | |

### Farbpaste "Schwarz"

| | |
|---|---|
| Bindemittel-Lösung aus Beispiel 7 | 60,00% |
| 2-Phenoxyethylacrylat | 16,70% |
| Solsperse 36000 | 2,50% |
| Solsperse 5000 | 0,80% |
| Ruß Nipex 35 | 20,00% |
| | |
| 1.800mPas @ 20°C | |
| 220mPas @ 70°C | |

### Beispiele für die Herstellung der erfindungsgemäßen Baumaterialien aus den beschriebenen Bindemittel-Lösungen und Farbpasten

### Beispiel Baumaterial "Transparent"

| | |
|---|---|
| Bindemittel-Lösung aus Beispiel | 7 50,00% |
| Irgacure184 | 9,50% |
| Irgacure819 | 0,50% |
| Sartomer SR506D | 18,25% |
| Sartomer SR349 | 8,75% |
| Sartomer SR484 | 13,00% |
| | |
| 160mPas @ 20°C | |
| 17m Pas @ 70°C | |

### Beispiel Baumaterial "Schwarz"

| | |
|---|---|
| Bindemittel-Lösung aus Beispiel 7 | 44,50% |
| Irgacure184 | 9,00% |
| Irgacure819 | 0,50% |
| ACMO | 2,40% |
| Sartomer SR339C | 25,15% |
| Sartomer SR506D | 10,00% |
| Sartomer SR349 | 8,20% |
| Farbpaste "Schwarz" | 0,25% |
| | |
| 235mPas @ 20°C | |
| 20mPas @ 70°C | |

### Beispiel Baumaterial "Weiß"

| | |
|---|---|
| Bindemittel-Lösung aus Beispiel | 7 45,0% |
| Farbpaste "Weiß" | 5,0% |
| Irgacure184 | 9,0% |
| Irgacure819 | 0,5% |
| Sartomer SR339C | 17,4% |
| Sartomer SR506D | 14,3% |
| Sartomer SR349 | 8,8% |
| | |
| 450mPas @ 20°C | |
| 32mPas @ 70°C | |

Trotz der hohen Viskosität ließ sich das Baumaterial überraschend mit Standard-Digitaldruckköpfen verdrucken.

| | | | X̅ | s |
|---|---|---|---|---|
| E-Modul | Eₜ | [MPa] | | |
| Zugfestigkeit | σ_{M} | [MPa] | 21,1 | 9,8 |
| Dehnung bei Zugfestigkeit | ε_{M} | [%] | 0,7 | 0,4 |
| Bruchspannung | σ_{B} | [MPa] | 21,1 | 9,8 |
| Bruchdehnung | ε_{B} | [%] | 0,7 | 0,4 |
| Streckspannung | σ_{Y} | [MPa] | | |
| Streckdehnung | ε_{Y} | [%] | | |

| | | | | |
|---|---|---|---|---|
| X (mit Überstrich): arithmetisches Mittel S: Standardabweichung | | | | |

Zugversuch Messung nach DIN EN ISO 527-1 der aus Beispiel Baumaterial "Weiß" gefertigten Zugstäben.

### Beispiel Baumaterial "Grau" 1

| | |
|---|---|
| ACMO | 0,20 |
| Bindemittel-Lösung aus | 46,67 |
| Beispiel 7 | |
| Irgacure 819 | 0,50 |
| Irgacure 184 | 9,00 |
| Ebecryl IBOA | 16,80 |
| Sartomer 484 | 12,30 |
| Sartomer 349 | 8,20 |
| Farbpaste Weiss | 5,00 |
| Farbpaste Schwarz | 0,30 |
| Tego Glide 440 | 0,03 |
| Byk-Silclean 3710 | 1,00 |
| | |
| Viskosität [mPas]@20°C | 201 |
| Viskosität [mPas]@70°C | 20 |
| Oberflächenspannung | 22 |
| [MN/m] | |

| | | | X̅ | s |
|---|---|---|---|---|
| E-Modul | Et | [MPa] | 1286,9 | 200,0 |
| Zugfestigkeit | σ_{M} | [MPa] | 41,2 | 2,8 |
| Dehnung bei Zugfestigkeit | ε_{M} | [%] | 3,0 | 0,8 |
| Bruchspannung | σ_{B} | [MPa] | 34,3 | 6,3 |
| Bruchdehnung | ε_{B} | [%] | 6,5 | 3.5 |
| Streckspannung | σ_{Y} | [MPa] | 41,2 | 2,8 |
| Streckdehnung | ε_{Y} | [%] | 3,0 | 0,8 |

Zugversuch Messung nach DIN EN ISO 527-1 der aus Beispiel Baumaterial "Grau 1" gefertigten Zugstäben.

### Beispiel Baumaterial ""Grau"2

| | |
|---|---|
| ACMO | 2,40 |
| Bindemittel-Lösung aus | 41,50 |
| Beispiel 7 | |
| Irgacure 184 | 9,50 |
| Ebecryl IBOA | 13,20 |
| Sartomer 349 | 8,10 |
| Miramer 140 | 20,40 |
| Farbpaste "Weiß" | 4,60 |
| Farbpaste "Schwarz" | 0,30 |
| | |
| Viskosität [mPas]@20°C | 200 |
| Viskosität [mPas]@70°C | 19 |

| | | | X̅ | s |
|---|---|---|---|---|
| E-Modul | Et | [MPa] | 1351,9 | 60,4 |
| Zugfestigkeit | σ_{M} | [MPa] | 42,0 | 1,1 |
| Dehnung bei Zugfestigkeit | ε_{M} | [%] | 3,8 | 0,2 |
| Bruchspannung | σ_{B} | [MPa] | 33,0 | 5,8 |
| Bruchdehnung | ε_{B} | [%] | 7,5 | 2,8 |
| Streckpannung | σ_{Y} | [MPa] | 42,2 | 1,2 |
| Streckdehnung | ε_{Y} | [%] | 3,9 | 0,0 |

Zugversuch Messung nach DIN EN ISO 527-1 der aus Beispiel Baumaterial "Grau 2" gefertigten Zugstäben.

### Beispiel zur Herstellung eines erfindungsgemäßen Baumaterials :

Bei der Herstellung eines erfindungsgemäßen Baumaterials wurden 30 Gew.-% des Festharzes Elvacite 1010 der Fa. Momentive in 70 Gew.-% UV-härtbarem Monomer 4-(1-Oxo-2-propenyl)morpholin gelöst.

Dem in UV-härtbarem Monomer 4-(1-Oxo-2-propenyl)morpholin gelöstem Bindemittel wurde ein Diacrylat, Fotoinitiatoren, Verlaufmittel, Verdicker und Pigmentpaste zugefügt und anschließend mit einem Dissolver dispergiert.

Zum Drucken eines 3D Objektes mit dem erfindungsgemäßen Baumaterial wurde das Baumaterial mit einer Viskosität von ca. 18 mPas bei 70°C (Rheometer der Fa. Paar Physica, Physica MCR300, Kegel-Platte-System bei einer Scherrate von 100/s) durch einen kommerziell erhältlichen 3D-Drucker gedruckt.

## Patentansprüche

1. Verdruckbares Baumaterial für die Herstellung eines dreidimensionalen Objekts mittels dreidimensionalem Drucken, enthaltend:
- als Bindemittel mindestens ein thermoplastisches Polymer
- als Lösemittel mindestens ein vernetzbares Monomer, das aus folgender Gruppe ausgewählt ist: Acrylate, Methacrylate, Vinylether, stickstoffhaltige Verbindungen mit einer ethylenischen Doppelbindung,
- mindestens einen Fotoinitator,
wobei das Bindemittel im Lösemittel gelöst ist und
wobei Bindemittel, Lösemittel und Fotoinitator so gewählt und auf einander abgestimmt sind, dass das Lösemittel durch Aktivierung des Fotoinitiators vernetzbar ist und dass das Bindemittel nicht durch Aktivierung des Fotoinitiators vernetzbar ist.

2. Baumaterial nach nach Anspruch 1,
**dadurch gekennzeichnet,**
**dass** das Lösemittel ein Monomergemisch aus unterschiedlichen vernetzbaren Monomeren ist, oder dass das Lösemittel ausschließlich aus einer Art von vernetzbaren Monomeren ausgebildet ist.

3. Baumaterial nach einem der vorangehenden Ansprüche, **dadurch gekennzeichnet,**
**dass** es mindestens ein Zusatzharz und/oder mindestens ein Additiv und/oder mindestens einen Füllstoff und/oder mindestens ein Pigment und/oder wenigstens einen Farbstoff in Kombination mit wenigstens einem Dispergiermittel und/oder mindestens ein Wachs umfasst.

4. Baumaterial nach einem der vorangehenden Ansprüche, **dadurch gekennzeichnet,**
**dass** das Bindemittel nicht durch Strahlenhärtung aushärtbar ist.

5. Baumaterial nach einem der vorangehenden Ansprüche, **dadurch gekennzeichnet,**
**dass** das vernetzbare Monomer eine Acrylkomponente und/oder Moleküle mit einem oder mit mehreren Epoxidsubstituenten und/oder Moleküle mit einem oder mit mehreren Vinylethersubstituenten, und/oder ethylenisch ungesättigte Verbindungen mit einem Stickstoffatom, insbesondere N-Vinylpyrrolidon und/oder N-Vinylcaprolactam und/oder N-Vinylformamid und/oder Acrylmorpholin umfasst oder ist.

6. Baumaterial nach einem der vorangehenden Ansprüche, **dadurch gekennzeichnet,**
**dass** der Fotoinitiator ein radikalischer Fotoinitiator, ein kationischer Fotoinitiator oder eine Kombination davon ist.

7. Baumaterial nach einem der vorangehenden Ansprüche, **dadurch gekennzeichnet,**
**dass** ausschließlich mindestens ein radikalischer Fotoinitiator und kein nicht radikalischer Fotoinitiator im Baumaterial enthalten ist und dass das Bindemittel ein nicht durch Aktivierung eines radikalischen Fotoinitiators vernetzbares thermoplastisches Polymer, insbesondere ein Epoxidharz, ist.

8. Baumaterial nach einem der vorangehenden Ansprüche, **dadurch gekennzeichnet,**
**dass** neben dem thermoplastischen Polymer in Form des Bindemittels zusätzlich ein weiteres UV-reaktives Polymer enthalten ist, das durch Aktivierung des Fotoinitiators mit sich selbst und/oder dem Lösemittel vernetzbar ist.

9. Baumaterial nach einem der Ansprüche 1 bis 7, **dadurch gekennzeichnet,**
**dass** neben dem thermoplastischen Polymer in Form des Bindemittels kein durch Aktivierung des Fotoinitiators vernetzbares Polymer im Baumaterial enthalten ist.

10. Baumaterial nach einem der vorhergehenden Ansprüche, **dadurch gekennzeichnet,**
**dass** die Viskosität, gemessen bei Drucktemperatur, insbesondere bei 70 °C, größer ist als 20 mPas, vorzugsweise zwischen 25 mPas und 35 mPas gewählt ist.

11. Verwendung eines Baumaterials nach einem der vorangehenden Ansprüche für den dreidimensionalen Digitaldruck.

12. Dreidimensionales Objekt erhalten durch Verwendung eines Baumaterials nach einem der Ansprüche 1 bis 11 im dreidimensionalen Digitaldruck.

13. Dreidimensionales Objekt, insbesondere nach vorhergehendem Anspruch, wobei das Objekt besteht aus vernetzten Monomeren, die eine Polymermatrix bilden, in die mindestens ein thermoplastisches Polymer rein physikalisch, insbesondere ohne kovalente Bindung zur Polymermatrix, eingebettet ist.

## Geänderte Patentansprüche

### Geänderte Patentansprüche gemäss Regel 137(2) EPÜ.

1. Verdruckbares Baumaterial für die Herstellung eines dreidimensionalen Objekts mittels dreidimensionalem Drucken, enthaltend:
- als Bindemittel mindestens ein thermoplastisches Polymer
- als Lösemittel mindestens ein vernetzbares Monomer, das aus folgender Gruppe ausgewählt ist: Acrylate, Methacrylate, Vinylether, stickstoffhaltige Verbindungen mit einer ethylenischen Doppelbindung,
- mindestens einen Fotoinitator,
wobei das Bindemittel im Lösemittel gelöst ist und
wobei Bindemittel, Lösemittel und Fotoinitator so gewählt und auf einander abgestimmt sind, dass das Lösemittel durch Aktivierung des Fotoinitiators vernetzbar ist und dass das Bindemittel nicht durch Aktivierung des Fotoinitiators vernetzbar ist.

2. Baumaterial nach nach Anspruch 1,
**dadurch gekennzeichnet,**
**dass** das Lösemittel ein Monomergemisch aus unterschiedlichen vernetzbaren Monomeren ist, oder dass das Lösemittel ausschließlich aus einer Art von vernetzbaren Monomeren ausgebildet ist.

3. Baumaterial nach einem der vorangehenden Ansprüche, **dadurch gekennzeichnet,**
**dass** es mindestens ein Zusatzharz und/oder mindestens ein Additiv und/oder mindestens einen Füllstoff und/oder mindestens ein Pigment und/oder wenigstens einen Farbstoff in Kombination mit wenigstens einem Dispergiermittel und/oder mindestens ein Wachs umfasst.

4. Baumaterial nach einem der vorangehenden Ansprüche, **dadurch gekennzeichnet,**
**dass** das Bindemittel nicht durch Strahlenhärtung aushärtbar ist.

5. Baumaterial nach einem der vorangehenden Ansprüche, **dadurch gekennzeichnet,**
**dass** das vernetzbare Monomer eine Acrylkomponente und/oder Moleküle mit einem oder mit mehreren Epoxidsubstituenten und/oder Moleküle mit einem oder mit mehreren Vinylethersubstituenten, und/oder ethylenisch ungesättigte Verbindungen mit einem Stickstoffatom, insbesondere N-Vinylpyrrolidon und/oder N-Vinylcaprolactam und/oder N-Vinylformamid und/oder Acrylmorpholin umfasst oder ist.

6. Baumaterial nach einem der vorangehenden Ansprüche, **dadurch gekennzeichnet,**
**dass** der Fotoinitiator ein radikalischer Fotoinitiator, ein kationischer Fotoinitiator oder eine Kombination davon ist.

7. Baumaterial nach einem der vorangehenden Ansprüche, **dadurch gekennzeichnet,**
**dass** ausschließlich mindestens ein radikalischer Fotoinitiator und kein nicht radikalischer Fotoinitiator im Baumaterial enthalten ist und dass das Bindemittel ein nicht durch Aktivierung eines radikalischen Fotoinitiators vernetzbares thermoplastisches Polymer, insbesondere ein Epoxidharz, ist.

8. Baumaterial nach einem der vorangehenden Ansprüche, **dadurch gekennzeichnet,**
**dass** neben dem thermoplastischen Polymer in Form des Bindemittels zusätzlich ein weiteres UV-reaktives Polymer enthalten ist, das durch Aktivierung des Fotoinitiators mit sich selbst und/oder dem Lösemittel vernetzbar ist.

9. Baumaterial nach einem der Ansprüche 1 bis 7, **dadurch gekennzeichnet,**
**dass** neben dem thermoplastischen Polymer in Form des Bindemittels kein durch Aktivierung des Fotoinitiators vernetzbares Polymer im Baumaterial enthalten ist.

10. Baumaterial nach einem der vorhergehenden Ansprüche, **dadurch gekennzeichnet,**
**dass** die Viskosität, gemessen bei 70°C mit einem Kegel- Platten-Verfahren bei einer Scherrate von 100/s größer ist als 20 mPas, vorzugsweise zwischen 25mPas und 35 mPas gewählt ist.

11. Verwendung eines Baumaterials nach einem der vorangehenden Ansprüche für den dreidimensionalen Digitaldruck.

12. Dreidimensionales Objekt erhalten durch Verwendung eines Baumaterials nach einem der Ansprüche 1 bis 11 im dreidimensionalen Digitaldruck.

13. Dreidimensionales Objekt nach Anspruch 12, wobei das Objekt besteht aus vernetzten Monomeren, die eine Polymermatrix bilden, in die mindestens ein thermoplastisches Polymer rein physikalisch, insbesondere ohne kovalente Bindung zur Polymermatrix, eingebettet ist.
